# EUROPEAN PATENT APPLICATION

(11) **EP 4 817 768 A1**
(43) Date of publication of application: **07.10.2026**
(21) Application number: 25168515.2
(22) Date of filing: 04.04.2025
(51) Int. Cl.: B23B 31/02, B23B 31/107, B23B 31/00

(54) **STRUCTURE FOR SECURING CUTTING TOOL AND POSITIONING TOOL LENGTH**

(71) Applicant: Chang, Hsin-Tien, Taichung City 411 (TW)
(72) Inventor: Chang, Hsin-Tien, Taichung City 411 (TW)
(74) Representative: Viering, Jentschura & Partner mbB Patent- und Rechtsanwälte

(57) **Abstract**

A structure for securing a cutting tool and positioning a tool length comprises tool holder (10). The tool holder (10) has a receiving hole (11) extending inward from one end face thereof. One side of the tool holder (10) has at least one inner screw hole (12) for receiving a locking screw (2). The inner screw hole (12) communicates with the receiving hole (11). The receiving hole (11) is configured for insertion of a shank (31) of a cutting tool (3). The locking screw (2) has a truncated conical portion (21) on a front end thereof. One side of the shank (31) of the cutting tool (3) has at least one dimple hole (32) in the form of an inner spherical hole. The dimple hole (32) corresponds to the truncated conical portion (21) of the locking screw (2) so that the cutting tool (3) can be secured by the locking screw (2).

## Description

### BACKGROUND OF THE INVENTION

### 1. Technical Field

The present invention relates to a structure for securing a cutting tool and positioning a tool length, which has the functions of accurate and fast positioning and locking.

### 2. Description of Related Art

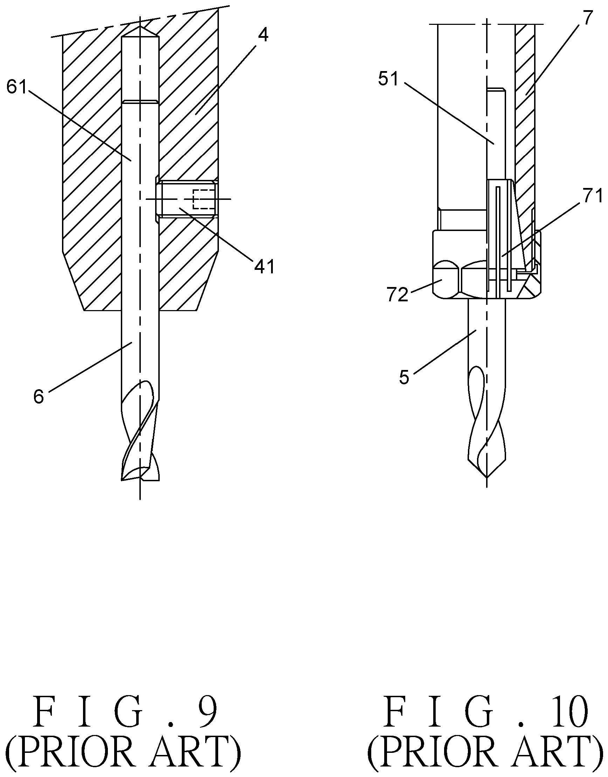

As shown in FIG. 9 and FIG. 10, conventional cutting tools, such as a drill bit 5 or a milling cutter 6, have a shank 51, 61 that is cylindrical. For securing the cylindrical shank 51, 61, some conventional tool holders 4 use a set screw 41 to lock the shank of the cutting tool, and some conventional tool holders 7 use a collet 71 and a nut 72 to tighten and secure the cutting tool.

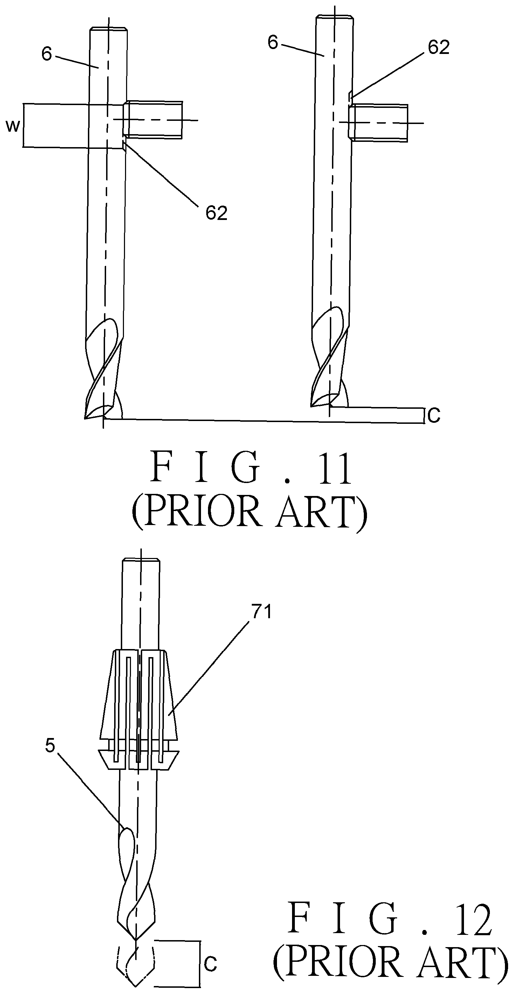

As shown in FIG. 9 and FIG. 10, the conventional locking means for cutting tools cannot locate the position the length of the cutting tool. After the drill bit 5 or milling cutter 6 is placed in the tool holder 7, 4, it is tightened and secured by the collet 71 and the nut 72, or it is laterally secured by the set screw 41. As shown in FIG. 11, the milling cutter 6 has a clearance C for upward and downward movement due to the width W of the locking plane 62, so the length of the cutting tool cannot be accurately located. Similarly, as shown in FIG. 12, the drill bit 5 held by the collet 71 also has a clearance C for upward and downward movement, so the length of the cutting tool cannot be accurately located. Therefore, the length of the cutting tool needs to be calibrated using a tool setter before the cutting tool is mounted on the machining equipment, or after the cutting tool is mounted on the machining equipment, a Z-axis setter is used to establish the reference tool length between the machine and the cutting tool, ensuring precise machining dimensions. Therefore, the tool length needs to be reset every time a cutting tool is replaced. The long setup time for tool length calibration increases ineffective machining time and cost, and it is necessary to train employees in tool length calibration skills.

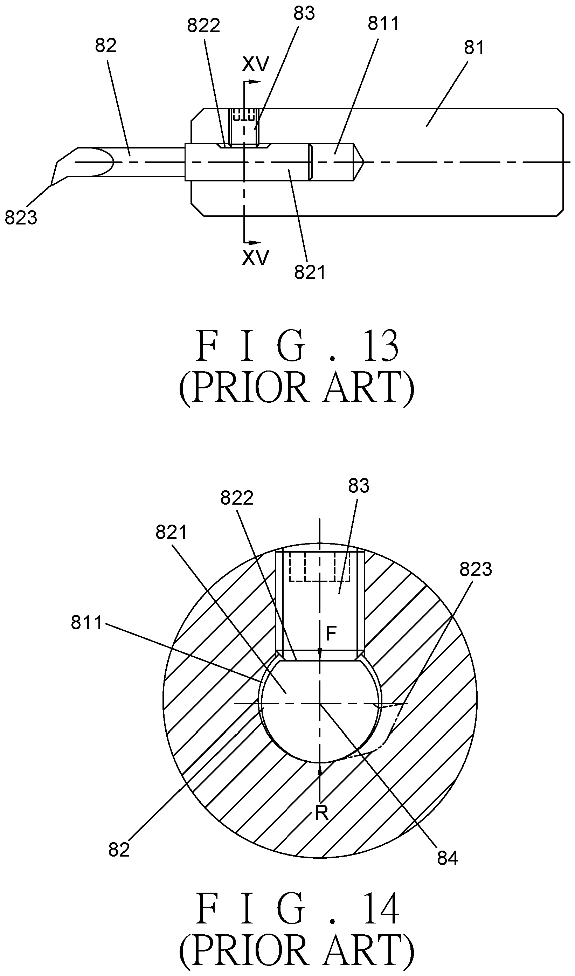

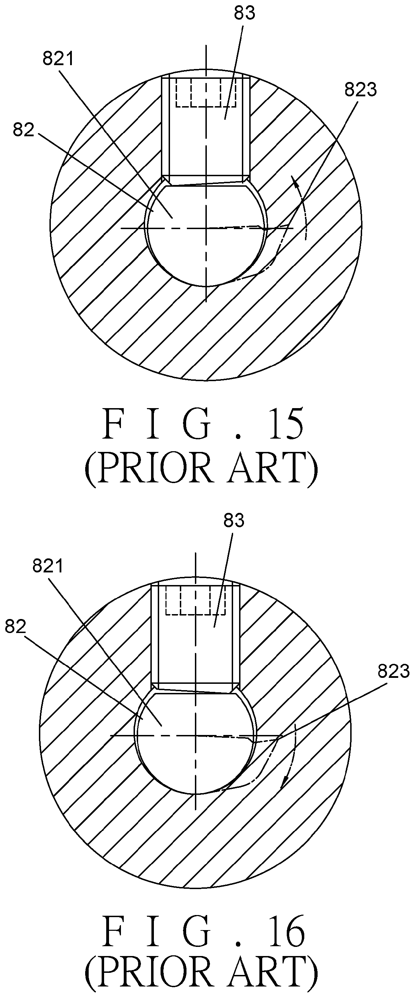

FIG. 13 shows a small internal hole turning tool available on the market, used for turning a hole with a diameter less than 10 mm, comprises a tool holder 81. A miniature inner hole turning tool 82 is inserted in the front end of the tool holder 81. One end of the inner hole turning tool 82 has a shank 821. The shank 821 is accommodated in a receiving hole 811 of the tool holder 81. The end face of a set screw 83 is secured on a flatten notch 822 of the shank 821 for locking the inner hole turning tool 82 onto the tool holder 81 in a lateral tightening manner. After the inner hole turning tool 82 is secured, the cutting tip 823 of the inner hole turning tool 82 must be positioned at the height of the workpiece center 84 (as shown in FIG. 14) under normal conditions to ensure the machining accuracy of the inner hole turning tool 82. FIG. 14 is a schematic view illustrating that the shank 821 is inserted into the receiving hole 811. FIG. 14 shows the receiving hole 811 enlarged several times to view the rotation of the shank 821 when it is secured by the set screw 83. As shown in the figure, when the front end face of the set screw 83 enters the flattened notch 822 of the shank 821 and is gradually tightened, the corresponding surface of the flattened notch 822 will be in single-point contact with the receiving hole 811, generating a coaxial locking force F and a reaction force R. Since the diameter of the receiving hole 811 is slightly greater than the diameter of the shank 821 by about 0.005-0.015 mm, the shank 821 will move toward the side of the reaction force R, resulting in a larger clearance on the side of the locking force F. In addition, the underside of the set screw 83 available on the market cannot be guaranteed to be completely perpendicular to the set screw 83, which results in a slight skew phenomenon. As shown in FIG. 15 and FIG. 16, when the shank 821 is locked and tightened by the set screw 83, the shank 821 will have a slight angle deflection, and the position of the cutting tip 823 of the inner hole turning tool 82 will deflect accordingly. As shown in FIG. 15 and FIG. 16, the skewness of the stop screw 83 is intentionally enlarged. The position of the cutting tip 823 may be too high (as shown in FIG. 15) or too low (as shown in FIG. 16), which will result in machining errors, particularly causing a smaller taper value when turning a taper or an increased thread angle when turning internal threads.

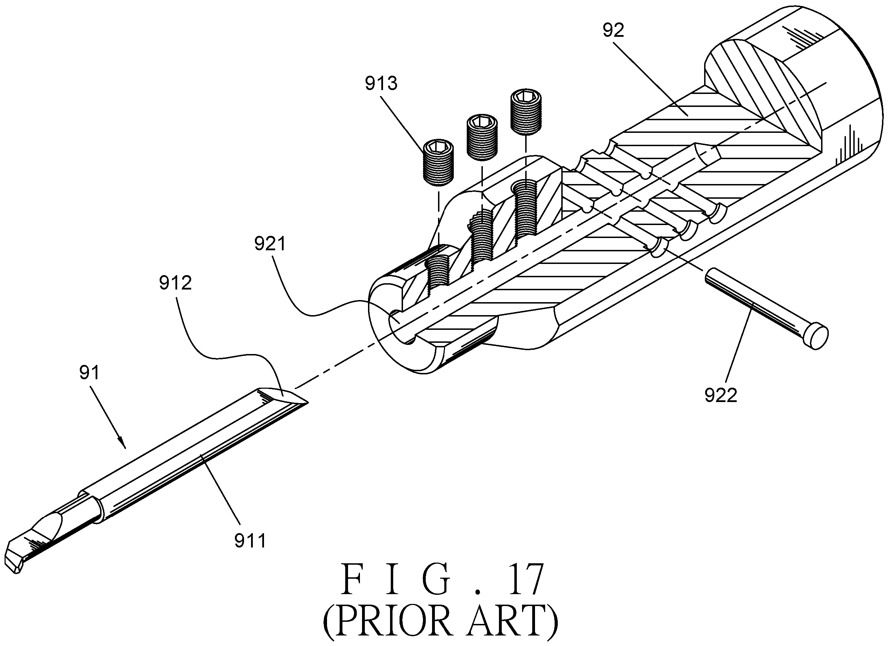

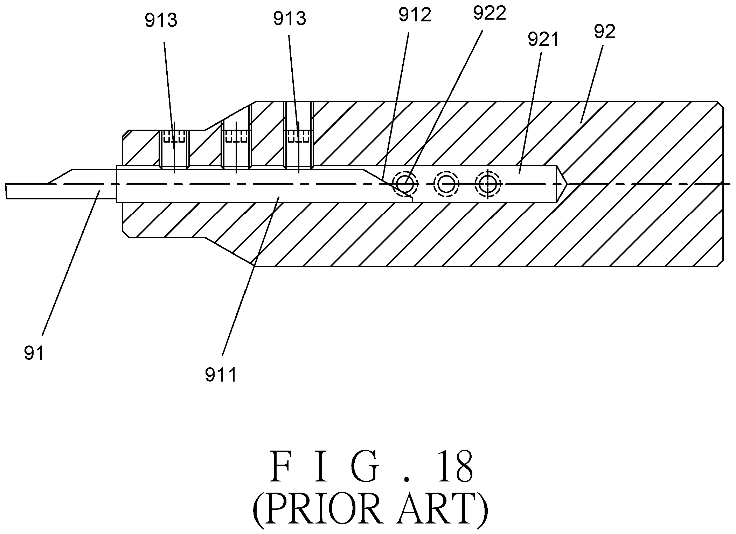

FIG. 17 and FIG. 18 show a small inner diameter hole turning tool produced by Kyocera company, having the functions of tool length adjustment and high-precision positioning when repeatedly changing tools. The tool includes an inner hole turning tool 91 and a tool holder 92. The rear end of the inner hole turning tool 91 has a shank 911. The shank 911 is accommodated in a receiving hole 921 defined in the front end of the tool holder 92. The end of the shank 911 has a stop surface 912 with a 30-degree slope. The stop surface 912 leans against a positioning pin 922 inserted transversely inside the tool holder 92, so that the position of the inner hole turning tool 91 is accurately located. The shank 911 is locked by a set screw 913. The positioning pin 922 may be inserted in different positions so that the cutting tip of the inner hole turning tool 91 may be in different positions. High-precision positioning is achieved by the contact between the stop surface 912 and the positioning pin 922. However, both the shank 911 of the inner hole turning tool 91 and the receiving hole 921 in the front end of the tool holder 92 are circular, and the diameter of the receiving hole 921 is slightly greater than the outer diameter of the shank 911, so there will be a small clearance when they are assembled. As the illustration of FIG. 15 and FIG. 16, when the shank 911 is locked by the set screw 913, the shank 911 may be slightly deflected, and the position of the cutting tip of the inner hole turning tool 91 may be deflected accordingly. The position of the cutting tip may be higher or lower.

The locking mechanism of the conventional cutting tool cannot directly position the tool length. It is necessary to use a tool length calibration device to calibrate the tool length. Therefore, each time a cutting tool is replaced, the tool length needs to be reset, and the length of the cutting tool needs to be calibrated using a tool setter, which increases the cost.

### SUMMARY OF THE INVENTION

In view of the shortcomings of the prior art, the primary objective of the present invention is to provide a structure for securing a cutting tool and positioning a tool length.

The present invention provides a structure for securing a cutting tool and positioning a tool length, comprising a tool holder. The tool holder has a receiving hole extending inward from one end face thereof. One side of the tool holder has at least one inner screw hole for receiving a locking screw. The inner screw hole communicates with the receiving hole. The receiving hole is configured for insertion of a shank of a cutting tool. The locking screw has a truncated conical portion on a front end thereof. One side of the shank of the cutting tool has at least one dimple hole in the form of an inner spherical hole. The dimple hole corresponds to the truncated conical portion of the locking screw so that the cutting tool can be secured by the locking screw.

In the present invention, the dimple hole of the shank of the cutting tool is gradually in close contact with the truncated conical portion on the front end of the locking screw by means of the thrust of the truncated conical portion. The height of the cutting tool along the Z axis is adjusted and slightly rotated to the correct position, such that the cutting tool is positioned precisely and quickly. Through the truncated conical portion to press against the dimple hole, the surface of the inner spherical hole is subjected to the thrust of the truncated conical portion, which can be distributed along the X, Y, and Z axes. In cooperation with the receiving hole, the shank of the cutting tool is completely constrained along the X, Y, and Z axes, so that the length of the cutting tool is precisely positioned while restricting its degrees of freedom along the three axes and ensuring a locking and positioning effect.

### BRIEF DESCRIPTION OF THE DRAWINGS

FIG. 1 is an exploded view of the present invention;
FIG. 2 is a cross-sectional view of the present invention;
FIG. 3 is an X-Z plane schematic view of the present invention, illustrating that the truncated conical portion of the locking screw is locked to the dimple hole of the shank of the cutting tool;
FIG. 4 is an X-Y plane schematic view of the present invention, illustrating that the truncated conical portion of the locking screw is locked to the dimple hole of the shank of the cutting tool;
FIG. 5 is a schematic view of the present invention, illustrating that the shank of the cutting tool has a plurality of dimple holes with different depths;
FIG. 6 is a schematic view of the present invention, illustrating that the shank of the cutting tool has two dimple holes in cooperation with two locking screws;
FIG. 7 is a first schematic view of the repeated positioning measurement of the positioning measurement rod of the present invention;
FIG. 8 is a second schematic view of the repeated positioning measurement of the positioning measurement rod of the present invention;
FIG. 9 is a schematic view illustrating that a cutting tool is secured by a conventional BT tool holder;
FIG. 10 is a schematic view illustrating that a cutting tool is secured by a collet of a conventional BT tool holder;
FIG. 11 is a schematic view showing the upper limit position and the lower limit position where the front end face of a conventional set screw locks the cutting tool ;
FIG. 12 is a schematic view illustrating that a cutting tool is secured by a conventional collet;
FIG. 13 is a schematic view illustrating a small internal hole turning tool available on the market;
FIG. 14 is an enlarged sectional view taken along line XV-XV of FIG. 13;
FIG. 15 is a schematic view showing that the position of the cutting tip of the inner hole turning tool in FIG. 14 is too high;
FIG. 16 is a schematic view showing the position of the cutting tip of the inner hole turning tool in FIG. 14 is too low;
FIG. 17 a schematic view showing a small inner diameter hole turning tool produced by Kyocera company; and
FIG. 18 is a cross-sectional view of FIG. 17.

### DETAILED DESCRIPTION OF THE INVENTION

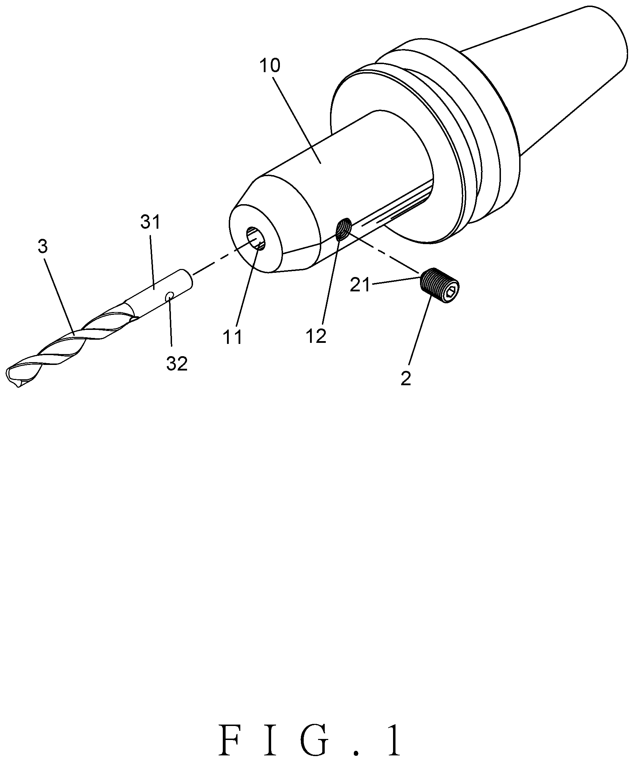

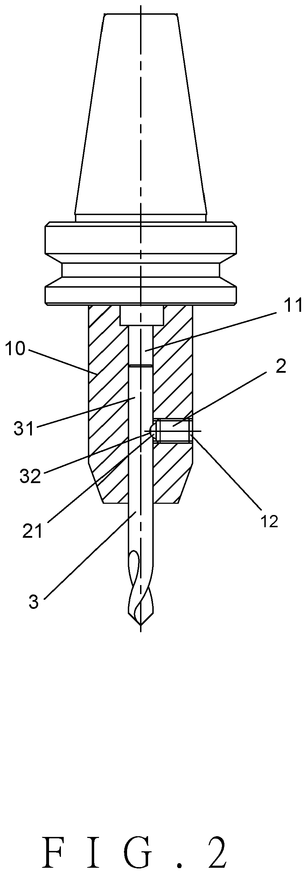

Referring to FIG. 1 and FIG. 2, an embodiment of the present invention comprises a tool holder 10 having a receiving hole 11 extending inward from one end face thereof. One side of the tool holder 10 has at least one inner screw hole 12 for receiving a locking screw 2. The inner screw hole 12 communicates with the receiving hole 11. The receiving hole 11 is configured for insertion of a shank 31 of a cutting tool 3.

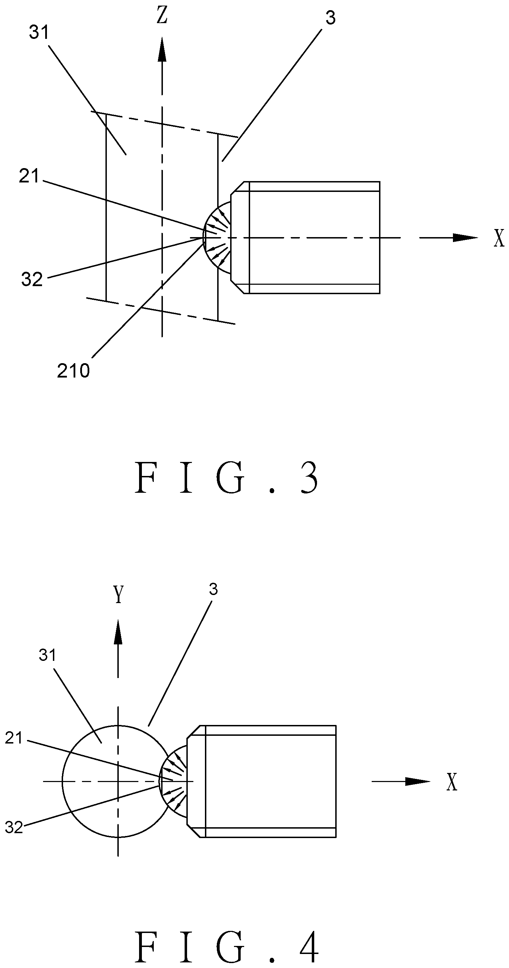

The locking screw 2 has a truncated conical portion 21 on a front end thereof. The front of the truncated conical portion 21 is a flat surface 210 (as shown in FIG. 3).

One side of the shank 31 of the cutting tool 3 has at least one dimple hole 32. The radius of the dimple hole 32 in the form of an inner spherical hole is equal to that of the truncated conical portion 21 of the locking screw 2.

Referring to FIG. 2, one side of the shank 31 of the cutting tool 3 has at least one dimple hole 32 in the form of an inner spherical hole. When the shank 31 of the cutting tool 3 is inserted into the receiving hole 11 of the tool holder 10, the truncated conical portion 21 on the front end of the locking screw 2 is pushed against the dimple hole 32 so that the tool length of the cutting tool 3 is quickly positioned, and then the locking screw 2 is gradually tightened, enabling the truncated conical portion 21 on the front end of the locking screw 2 to press against the dimple hole 32. Referring to FIG. 2, FIG. 3 and FIG. 4, the dimple hole 32 is gradually in close contact with the truncated conical portion 21 by means of the thrust of the truncated conical portion 21. The height of the cutting tool 3 along the Z axis is adjusted and slightly rotated to the correct position, such that the length of the cutting tool 3 is precisely positioned. Through the truncated conical portion 21 to press against the dimple hole 32, the surface of the inner spherical hole is subjected to the thrust of the truncated conical portion 21, which can be distributed along the X, Y, and Z axes. In cooperation with the receiving hole 11, the shank 31 of the cutting tool 3 is completely constrained along the X, Y, and Z axes, so that the length of the cutting tool 3 is precisely positioned while restricting its degrees of freedom along the three axes and ensuring a locking and positioning effect. The front of the truncated conical portion 21 is the flat surface 210, so as to prevent end-face compression and the transmission of interference force when the truncated conical portion 21 is pressed against the dimple hole 32.

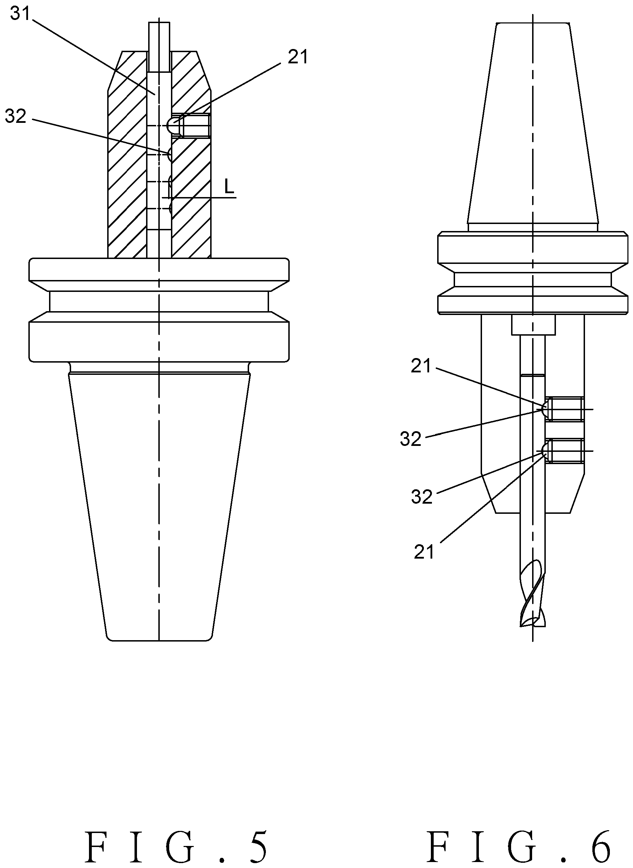

FIG. 5 illustrates a torque test of the dimple holes 32 with different depths L and the truncated conical portion 21 after being locked. In this test, the diameter of the shank 31 is 6 mm, the diameter of the truncated conical portion 21 is 4 mm, and the depth L of the dimple hole is 0.5 mm, capable of withstanding a torque of 12Nm (Newton-meter), with a breaking torque of up to 14Nm; the depth L of the dimple hole is 0.7 mm, capable of withstanding a torque of 14Nm (Newton-meter), with a breaking torque of up to 16Nm; the depth L of the dimple hole is 0.9 mm, capable of withstanding a torque of 18Nm (Newton-meter), with a breaking torque of up to 20Nm. Under the same material conditions, a 6 mm diameter steel bar held by an ER16 collet can withstand a torque of up to 9Nm. When the torque exceeds 10Nm, the 6 mm steel bar will slip. In this experimental comparison, the present invention uses the corresponding locking mechanism between the truncated conical portion 21 and the dimple hole 32, providing excellent locking strength.

FIG. 6 illustrates an embodiment of two sets of the truncated conical portions 21 and the dimple holes 32 of the present invention. With a single set of the truncated conical portion 21 (the diameter of the truncated conical portion 21 is 4 mm) and the dimple hole 32 (the diameter of the shank 31 is 6 mm), the depth L of the dimple hole is 0.9 mm, capable of withstanding a torque of 18Nm (as shown in FIG. 5). However, for a 6 mm drill bit, carbon steel only requires 3-4Nm torque in the machining process. For larger drill bits or milling cutters that require greater torque, the number of the truncated conical portions 21 and the dimple holes 32 can be increased accordingly. As the embodiment shown in FIG. 6, two sets of the truncated conical portions 21 and the dimple holes 32 are configured for drilling or milling operations with higher cutting stresses.

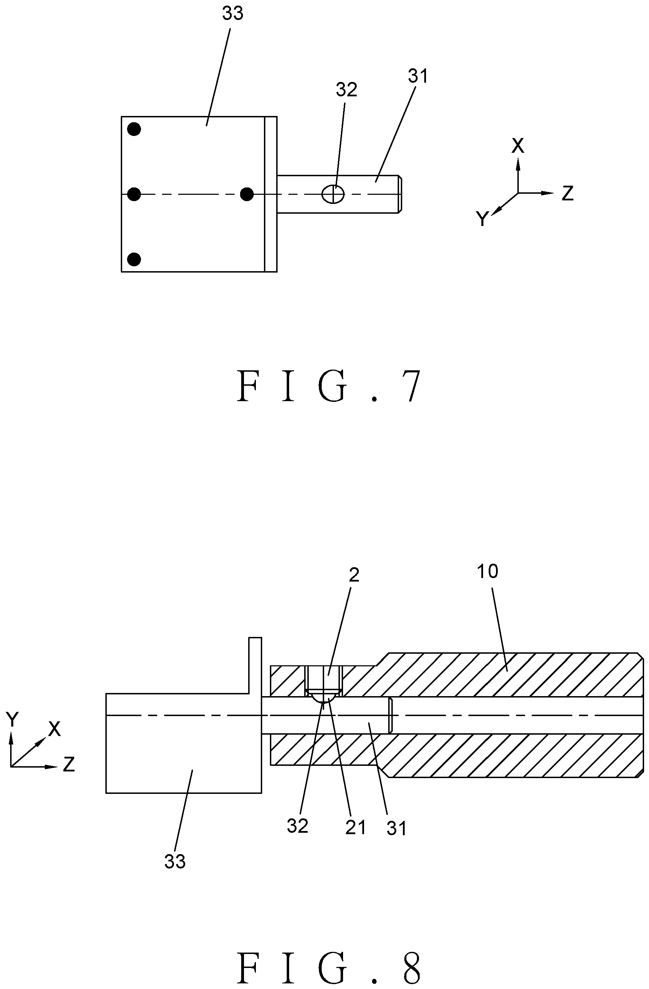

FIG. 7 and FIG. 8 illustrate the milling and positioning test of a positioning measurement rod 33 of the present invention. A round bar with a diameter of 25 mm is turned into a 6 mm round bar as the shank 31. The shank 31 has the dimple hole 32 with a diameter of 4 mm. A planar notch is milled on the other end of the positioning measurement rod 33. The positioning measurement rod 33 is mounted to the tool holder 10 and secured by the locking screw 2. A four-point positioning test is conducted on the measuring instrument (as shown in the figure, four black dots on the planar notch) to measure the repeated positioning accuracy in the X, Y, and Z axes. The error of measurement is less than 0.01 mm. Therefore, the repeated positioning accuracy of the truncated conical portion 21 and the dimple hole 32 of the present invention is within 0.01 mm, which has the advantage of high repeated positioning accuracy.

In the present invention, the front end of the locking screw has the truncated conical portion, and the dimple hole is in the form of an inner spherical hole. The dimple hole is gradually in close contact with the truncated conical portion by means of the thrust of the truncated conical portion. The height of the cutting tool along the Z axis is adjusted and rotated to the correct position, such that the cutting tool is positioned precisely and quickly. Through the truncated conical portion to press against the dimple hole, the surface of the inner spherical hole is subjected to the thrust of the truncated conical portion, which can be distributed along the X, Y, and Z axes. In cooperation with the receiving hole, the shank of the cutting tool is completely constrained along the X, Y, and Z axes, so that the length of the cutting tool is precisely positioned while restricting its degrees of freedom along the three axes and ensuring a locking and positioning effect.

In summary, the present invention has the following progressive and innovative advantages:
1. Saving time in setting the tool length.
2. The locking strength of the cutting tool is good, which enhances the rigidity of the cutting tool, increases the cutting feed rate of the cutting tool effectively, improves cutting efficiency, and reduces cutting costs.
3. The positioning and locking strength of the cutting tool is increased, effectively preventing the locking part of the cutting tool from slipping and rotating, reducing the risk of cutter edge impact, preventing the cutting tool from being damaged, and enhancing the safety of machining operations.
4. The cutting tool can be positioned precisely and quickly.

The present invention indeed improves the shortcomings of the prior art, enabling the tool length of the cutting tool to be positioned quickly and precisely. Improvement of the locking mechanism can prevent the cutting tool from slipping, reduce the risk of cutter edge impact, prevent the cutting tool from being damaged, and enhance the safety of machining operations.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A structure for securing a cutting tool and positioning a tool length, comprising:
a tool holder (10), having a receiving hole (11) extending inward from one end face thereof, one side of the tool holder (10) having at least one inner screw hole (12) for receiving a locking screw (2), the inner screw hole (12) communicating with the receiving hole (11), the receiving hole (11) being configured for insertion of a shank (31) of a cutting tool (3), wherein:
the locking screw (2) has a truncated conical portion (21) on a front end thereof;
one side of the shank (31) of the cutting tool (3) has at least one dimple hole (32) in the form of an inner spherical hole.

2. The structure as claimed in claim 1, wherein the at least one inner screw hole (12) is plural, and the at least one dimple hole (32) is plural and corresponds in number to the at least one inner screw hole (12).
